# EUROPEAN PATENT SPECIFICATION

(11) **EP 1 370 053 B1**
(45) Date of publication and mention of the grant of the patent: **02.08.2006**
(21) Application number: 02360162.8
(22) Date of filing: 05.06.2002
(51) Int. Cl.: H04M 1/60

(54) **A hands free mobile phone communication system as well as a mobile terminal and an audio system therefore**
Freisprechkommunikationssystem für Mobiltelefon wie auch ein Mobiltelefon und ein Audiosystem dafür
Système de communication d'un téléphone mobile mains libres ainsi qu'un téléphone mobile et un système audio pour lequel

(43) Date of publication of application: 10.12.2003
(73) Proprietor: ALCATEL, 75008 Paris (FR)
(72) Inventor: Gass, Vincent, 67150 Bolsenheim (FR)
(74) Representative: Rausch, Gabriele

(56) References cited:
- EP-A- 0 920 170
- EP-A- 1 047 249
- EP-A- 1 052 834
- WO-A-02/07336
- WO-A-96/32783
- WO-A-98/57824
- DE-A- 19 939 631

## Description

The invention relates to a hands free mobile phone communication system according to the preamble of claim 1, as well as to a mobile terminal according to the preamble of claim 5 and an audio system according to the preamble of claim 6 therefore.

An increasing number of car owners have a mobile phone. For safely using a mobile phone or mobile terminal while driving, hands free operation of the mobile terminal is suggested. In a lot of countries, a speaker phone or a device for hands free communication is mandatory for the usage of a mobile terminal by a car driver. One problem for using a mobile terminal remote from the human ear in a car is the ambient noise, that makes it is difficult to understand a communication partner, even if the mobile terminal is switched to a maximum volume. To solve this problem, car kits are known from the prior art, that may be electrically connected or radio connected to the mobile terminal for amplification of the audio signal of the mobile terminal, and distribution over a corresponding acoustic system.

EP 0 920 170 discloses a handsfree adapter system internally using an FM or AM carrier frequency for transmission between the mobile handset and the audio system.

For coupling an existing car radio set including a radio data system (RDS) receiver to a mobile phone, EP 1047249 describes a system for hands free mobile communication in a car with a mobile terminal comprising an FM (frequency modulation) emitter including an RDS emitter. When a call is coming in to the mobile terminal, said mobile terminal sends an RDS information to the radio set to advise said radio set to receive FM-modulated information of a certain carrier frequency from the mobile terminal. The FM receiver of the radio set then switches to the advised frequency and the audio output of the car radio is switched to said FM-receiver for distributing the received information to the loudspeakers connected.

For this system, at least one more or less permanent blank frequency, i.e. an unused frequency band or frequency channel, must be known in advance to be used for the diffusion of said FM signals by the mobile terminal. However, in a lot of regions in the world, blank frequencies are quite rare. Moreover, in countries with a dense distribution of radio senders and a difficult topography (mountains), the distribution of blank frequencies is depending on the reception situation of different radio senders of the receivers location. Thus, for a moving car, available blank frequencies, i.e. unused or not occupied frequencies, may change quite often.

The object of the invention is to propose a method, a terminal and a communications system in the context of the above described system, that allows a continuous diffusion of said radio signals over dynamically changing unused frequency channels.

This object is achieved in accordance with the invention by a hands free mobile phone communication system according to the teaching of claim 1, a terminal according to the teaching of claim 5 and an audio system according to the teaching of claim 6.

The basic principle of the invention is, that unused frequency channels are continuously determined, i.e. by carrying out periodically frequency scanning runs, in a hands free communication system comprising a mobile terminal and an audio system, equipped with a radio sender and a radio receiver respectively. The mobile terminal and the audio system actually communicate a selection of a free frequency channel and each synchronise to said selected free frequency.

Further developments of the invention can be gathered from the dependent claims and the following description.

In the following the invention will be explained further making reference to the attached drawings in which:
- Fig. 1: schematically shows an exemplary embodiment of a hands free mobile phone communication system according to the invention,
- Fig.2: schematically shows an exemplary further embodiment of the hands free mobile phone communication system according to Fig. 1 and
- Fig.3: shows a base band spectrum of a standard FM broadcast signal with stereo and sub carrier signals.

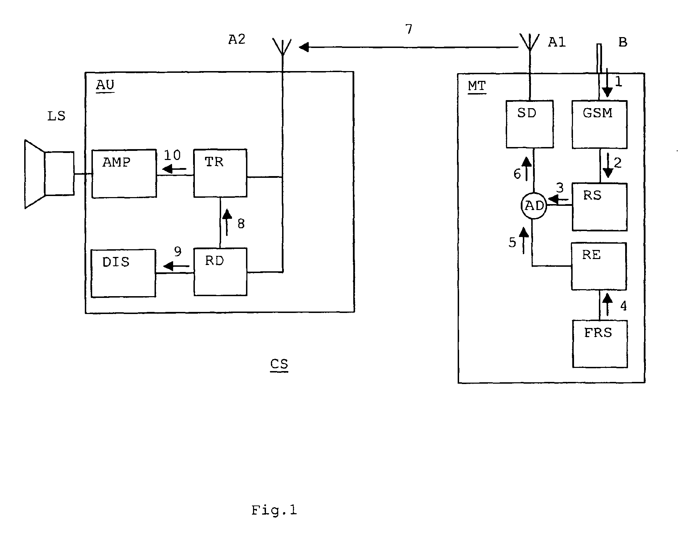

Fig. 1 schematically shows a hands free mobile phone communication system CS comprising an audio system AU and a mobile terminal MT. The break down of functional blocks explained in the following is shown in principle and does not claim completeness. Particularly, preamplifiers or attenuators, that might be necessary to adapt the signal power are not shown here. The shown functional blocks might be realised as distinctive physical devices or as logical blocks, i.e. as a program module, within one microprocessor controlled physical device, e.g. the mobile phone MT or the audio system AU. Said blocks might be combined or further divided into sub block or functions of one block might be shifted to another block without leaving the scope of the invention.

The audio system AU comprises an FM receiving antenna A2, an FM (FM = frequency modulation) tuner TR and a RDS decoder RD an audio amplifier AMP and a display DIS. The FM receiving antenna A2 is connected to the inputs of each the FM tuner TR and to the RDS decoder RD. The output of the RDS decoder RD is connected to the input of the display DIS. The output of the FM tuner TR is connected to the input of the amplifier AMP, that is connected at its output to a loudspeaker LS, here shown by way of example as an external device.

The mobile terminal MT shows an GSM antenna B, an FM sending antenna A1, a GSM receiver GSM, an FM signal generator RS, an RDS encoder RE, a frequency scanner FRS an FM sender SD and a signal adder AD. The GSM antenna B is connected to the input of the GSM receiver GSM. The output of the GSM receiver is connected to the input of the FM signal generator RS. The output of the frequency scanner FRS is connected to the RDS encoder RE. The outputs of each the FM signal generator RS and the RDS encoder RE are connected to the signal adder AD with its output connected to the input of the FM sender SD. The output of the FM sender SD is connected to the FM sending antenna A1.

In the following a rough logical information/signal flow will be explained:

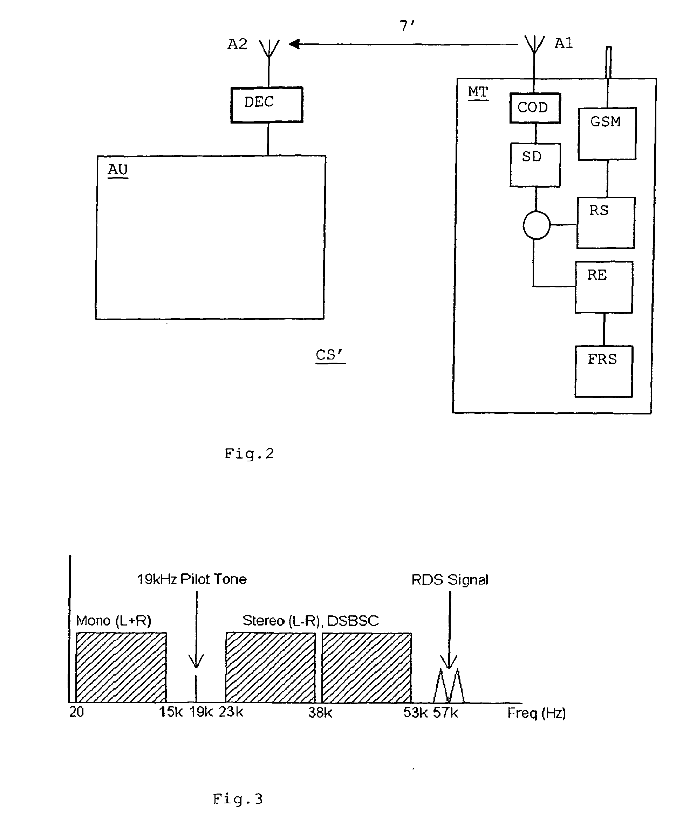

A GSM signal 1 is received at the GSM antenna B and forwarded to the GSM receiver GSM. The GSM receiver decodes said GSM data 1 and passes respective decoded GSM data 2 to the FM signal generator RS. Said signal generator generates a modulated base band FM signal 3 according to Fig.3 explained later on. The frequency scanner FRS periodically scans the FM frequency band, i.e. the frequency band between 87 MHz and 107 MHz for free frequency channels. If a free channel is detected, the detected free channel, or, if more than one free channel is detected, a selected one of the detected free frequency channels is reported as free frequency or free channel information 4 to the RDS encoder RE. The RDS encoder encodes said frequency or channel information generating a corresponding RDS signal 5 modulated on the RDS sub carrier at 57 KHz. Said RDS signal 5 and the FM signal 3 are combined by the signal adder AD and a corresponding combined signal 6 is fed to the FM sender SD. The FM sender shifts the spectrum of said combined signal 6 into the selected free frequency channel generating an FM signal 7 to be emitted over the air at a frequency corresponding to the sending antenna A1. This signal is received by the receiving antenna A2 and fed to the FM tuner TR and the RDS decoder RD. The RDS decoder RD, by decoding the RDS signal part of the FM signal 7 retrieves the channel information 4 generated by the frequency scanner FRS. Said channel information and or other information comprising in the RDS signal can be fed as display data 9 to the display DIS. Based on said channel information, the tuner TR is advised by advising information 8 to switch to the corresponding frequency for demodulating the received FM signal 7. The demodulated FM signal 10 is fed to the amplifier AMP, that outputs corresponding audio data to the loudspeaker LS.

The above solution does not require any change on existing car radios capable of receiving RDS information to serve as an audio system AU. Existing mobile phones can be easily modified to serve as mobile terminal MT by adding a radio emitter card as an accessory, which uses the same wiring as the already existing radio receiver card for mobile terminals.

When the mobile terminal MT receives a call, an RDS code named TA (Traffic Announcement) is first sent to the audio system AU to automatically switch to the radio (if not already being switched to). The same code TA is used to carry the advising information 8 to command the radio to switch on a selected frequency, i.e. a frequency, that was selected by the frequency scanner FRS. The ringing tone now is transmitted over FM radio to the loudspeaker LS. Moreover, the RDS information may contain additional information, e.g. the GSM caller name or the calling number to be displayed on the display DIS. The GSM conversation then (if the called user accepts) is transmitted between the mobile terminal MT and the audio system AU on the selected FM frequency. If, during moving, the free frequencies change, i.e. if occupation is detected on the currently used frequency, the frequency scanner FRS selects a new frequency and initiates sending an RDS information to the audio unit AU to switch (in a certain, e.g. predefined time) to said selected frequency. The transmission frequency between the mobile terminal MT and the audio system is changed to the selected frequency or channel.

Alternatively to the display of RDS information, said information is converted into audio information. For this case conversion means are comprised in the audio system to convert RDS information received by the mobile terminal MT, MT' into speech information to be fed to the amplifier AMP.

Alternatively to the frequency scanning in the mobile terminal MT, the frequency scanning is performed within the audio system AU, that informs the mobile terminal MT about a selected free frequency.

Alternatively to the radio transmission between the audio system AU and the mobile terminal MT, the communication is performed over an antenna wire. In this case, proprietary coded information can be easily additionally transmitted. So, free channel information may be sent from the radio to the mobile phone or vice versa by proprietary protocols.

A mobile terminal MT can be used together with audio systems of different cars. Providing a method to send an identification code, i.e. the GSM SIM (subscriber information module) authentication code to the audio system AU, that may identify the corresponding user. In this way, an easy anti theft feature may be realised: Without correct identification data, the car radio remains switched off.

Fig.2 shows an exemplary further embodiment of the previously described hands free mobile phone communication system, that enables a high level of confidentiality for the communication between the mobile terminal MT and the audio system AU. Fig. 2 shows, in addition to Fig. 1 a modified hands free mobile phone communication system CS' with a small decoder DEC, that is connected to the antenna plug of the audio system AU, i.e. between the FM receiving antenna A2 and the audio system AU. A corresponding coding device COD is shown inserted between the FM sender SD and the FM sending antenna A1 of a modified mobile terminal MT'. Between the modified mobile terminal MT' and the audio system AU, a coded FM signal 7' is transmitted. If this FM signal is intercepted by other FM receivers, e.g. by car radios of adjacent cars, the information carried in this signal 7' can not be decoded without knowing the corresponding coding key.

Today, CSM terminal equipped with MP3 players are available. The proposed solution can be used to play MP3 files from the mobile terminal MT or MT' via the car audio system, still keeping the basic service (GSM telephony) available.

If localisation services are available within a corresponding GSM system, the proposed solution makes it possible to display the related information on the car radio display.

The RDS system is a standardised and well known system in Europe for transmitting data together with frequency modulated (FM) voice information. The RDS uses an own sub carrier of a frequency of 57 KHz in the base band.

Referring to Fig.3, a well known spectrum of an FM base band signal including an RDS signal spectrum is shown. A first band Mono, carrying a left signal and right signal (L+R), covers the range between 20 Hz and 15 KHz and a second band stereo (with both side bands), carrying the left signal minus the right signal (L-R), covers the range between 23 KHz and 53 KHz. A pilot tone carrier at 19 KHz serves to decode and to provide a stereo difference signal. Around a sub carrier at 57 KHz, which is used to separate left and right channels in a receiver. Further, +/- 2.4 KHz around an RDS sub carrier at 57 KHz, left and right parts of an RDS data signal are shown (exhibiting low energy around the sub carrier frequency of 57 KHz). The RDS signal is decoded in the receiver e.g. to provide display information or control information as described under the figures Fig. 1 and Fig.2.

Instead of FM modulation, other kind of signal modulation may be used for signal transmission between the mobile terminal MT and the audio system. Instead of RDS coded information, any other kinds if data signal may be sent between the mobile terminal MT and the audio system.

## Claims

1. A hands free mobile phone communication system (CS, CS') comprising an audio system (AU) and a mobile terminal (MT, MT'), latter for receiving information over a telephone connection, with a radio sender (RS, SD) for sending said information over a selected frequency channel to the audio system (AU), the audio system (AU) being equipped with a broadcast radio receiver (TR) and with an audio amplifier (AMP) for an audio output of information received on said selected frequency channel, **characterised in, that** the hands free mobile phone communication system (CS, CS') comprises furthermore determination means for determining continuously an unused frequency channel by carrying out periodically frequency scanning runs, communication means (IS, RD) for communicating the information (4, 8) of the determined unused frequency within the communication system (CS, CS') and switching means for switching the radio sender (SD) and the radio receiver (TR) to said determined frequency channel.

2. A hands free mobile phone communication system (CS') according to claim 1, **characterised in, that** coding means are comprised for modification of the information to be sent to said audio system (AU) and decoding means are comprised to eliminate said modification before an audio output.

3. A hands free mobile phone communication system (CS, CS') according to claim 1, **characterised in, that** identification means in the audio system (AU) for an identification of the mobile phone (MT, MT') and locking means for electrically locking said audio system (AU) depending on the identification result are comprised.

4. A hands free mobile phone communication system (CS, CS') according to claim 1, **characterised in that** conversion means are comprised to convert signalling information received by the mobile terminal (MT, MT') into speech information for audio distribution of the audio system (AU).

5. A mobile terminal (MT, MT') for receiving telephone information over a telephone connection, with a radio sender (RS, SD) for forwarding said telephone information after being adapted over a selected frequency channel to be received by an audio system (AU) equipped with a broadcast radio receiver (TR) **characterised in, that** the mobile terminal (MT, MT') comprises selection means (FRD, FRS) to determine continuously an unused frequency channel by carrying out periodically frequency scanning runs, and generating means (RE) for generating a corresponding free channel information to be received by said audio system (AU).

## Patentansprüche

1. Ein Freisprechkommunikationssystem für Mobiltelefon (CS, CS'), das ein Audiosystem (AU) und ein Mobiltelefon (MT, MT'), letzteres zum Empfang von Informationen über eine Telefonverbindung, mit einem Radiosender (RS, SD) zum Senden der Informationen über einen ausgewählten Frequenzkanal zum Audiosystem (AU), enthält, wobei das Audiosystem (AU) mit einem Rundfunk-Radioempfänger (TR) und mit einem Audioverstärker (AMP) ausgestattet ist, um die Audio-Ausgabe der auf dem gewählten Frequenzkanal empfangenen Information durchzuführen, **dadurch gekennzeichnet, dass** das Freisprechkommunikationssystem für Mobiltelefon (CS, CS') weiterhin Bestimmungs-Mittel, um kontinuierlich einen unbenutzten Frequenzkanal zu bestimmen, indem regelmäßige Frequenzabtastungen durchgeführt werden, Kommunikations-Mittel (IS, RD) zur Übermittlung der Information (4, 8) der bestimmten unbenutzten Frequenz im Kommunikationssystem (CS, CS') und Schall-Mittel zum Umschalten des Radiosenders (SD) und des Radioempfängers (TR) auf den bestimmten Frequenzkanal enthält.

2. Ein Freisprechkommunikationssystem für Mobiltelefon (CS') gemäß Anspruch 1, **dadurch gekennzeichnet, dass** Codierungs-Mittel enthalten sind, um die zum Audiosystem (AU) zu sendende Information zu ändern, und Decodier-Mittel enthalten sind, um die Änderung vor einer Audio-Ausgabe zu beseitigen.

3. Ein Freisprechkommunikationssystem für Mobiltelefon (CS, CS') gemäß Anspruch 1, **dadurch gekennzeichnet, dass** Identifizierungs-Mittel im Audiosystem (AU) für eine Identifizierung des Mobiltelefons (MT, MT') und VerriegelungsMittel für eine elektrische Verriegelung des Audiosystems (AU) abhängig vom Identifizierungs-Ergebnis enthalten sind.

4. Ein Freisprechkommunikationssystem für Mobiltelefon (CS, CS') gemäß Anspruch 1, **dadurch gekennzeichnet, dass** Umwandlungs-Mittel enthalten sind, um die vom Mobiltelefon (MT, MT') empfangene Signalisierungs-Information in Sprachinformation für die Audio-Verteilung des Audiosystems (AU) umzuwandeln.

5. Ein Mobiltelefon (MT, MT') zum Empfang von Telefon-Informationen über eine Telefonverbindung, das einen Radiosender (RS, SD) hat, um die Telefon-Informationen, nachdem sie angepasst wurden, über einen gewählten Frequenzkanal weiterzuleiten, um von einem Audiosystem (AU) empfangen zu werden, das mit einem Rundfunk-Radioempfänger (TR) ausgestattet ist, **dadurch gekennzeichnet, dass** das Mobiltelefon (MT, MT') Auswahl-Mittel (FRD, FRS) enthält, um kontinuierlich einen unbenutzten Frequenzkanal zu bestimmen, indem regelmäßige frequenzabtastungen durchgeführt werden, und Erzeugungs-Mittel (RE), um eine entsprechende Information über freie Kanäle zu erzeugen, die von dem Audiosystem (AU) zu empfangen sind.

## Revendications

1. Système de communication mains libres pour téléphone mobile (CS, CS') comprenant un système audio (AU) et un terminal mobile (MT, MT'), ce dernier étant destiné à recevoir des informations sur une connexion téléphonique, un émetteur radio (RS, SD) étant destiné à envoyer lesdites informations sur un canal de fréquence sélectionné vers le système audio (AU), le système audio (AU) étant muni d'un récepteur de radiodiffusion (TR) et d'un amplificateur audio (AMP) destiné à la sortie audio d'informations reçues sur ledit canal de fréquence sélectionné, **caractérisé en ce que** le système de communication mains libres pour téléphone mobile (CS, CS') comprend en outre un moyen de détermination destiné à déterminer de manière continue un canal de fréquence inutilisé en exécutant périodiquement des balayages de fréquences, un moyen de communication (IS, RD) destiné à communiquer les informations (4, 8) de la fréquence inutilisée déterminée à l'intérieur du système de communication (CS, CS') et un moyen de commutation destiné à faire basculer l'émetteur radio (SD) et le récepteur radio (TR) vers ledit canal de fréquence déterminé.

2. Système de communication mains libres pour téléphone mobile (CS') selon la revendication 1, **caractérisé en ce qu'**un moyen de codage est compris en vue de la modification des informations à envoyer audit système audio (AU), et **en ce qu'**un moyen de décodage est compris pour éliminer ladite modification avant la sortie audio.

3. Système de communication mains libres pour téléphone mobile (CS, CS') selon la revendication 1, **caractérisé en ce que** sont compris un moyen d'identification dans le système audio (AU) destiné à une identification du téléphone mobile (MT, MT') et un moyen de verrouillage destiné à verrouiller électriquement ledit système audio (AU) en fonction du résultat de l'identification.

4. Système de communication mains libres pour téléphone mobile (CS, CS') selon la revendication 1, **caractérisé en ce qu'**un moyen de conversion est compris pour convertir des informations de signalisation reçues par le terminal mobile (MT, MT') en informations de paroles en vue d'une répartition audio du système audio (AU).

5. Terminal mobile (MT, MT') destiné à recevoir des informations téléphoniques sur une connexion téléphonique, un émetteur radio (RS, SD) étant destiné à propager lesdites informations téléphoniques après qu'elles ont été adaptées sur un canal de fréquence sélectionné pour qu'elles soient reçues par un système audio (AU) muni d'un récepteur de radiodiffusion (TR), **caractérisé en ce que** le terminal mobile (MT, MT) comprend un moyen de sélection (FRD, FRS) afin de déterminer de manière continue un canal de fréquence inutilisé en exécutant périodiquement des balayages de fréquences, et un moyen de génération (RE) destiné à générer des informations correspondantes de canal libre devant être reçues par ledit système audio (AU).
